(19) Europäisches Patentamt
European Patent Office
Office européen des brevets

(11) **EP 2 469 502 A1**

(12) **DEMANDE DE BREVET EUROPEEN**

(43) Date de publication:
**27.06.2012 Bulletin 2012/26**

(51) Int Cl.:
**G09B 29/10** *(2006.01)*

(21) Numéro de dépôt: **11306759.9**

(22) Date de dépôt: **22.12.2011**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **23.12.2010 FR 1005102**

(71) Demandeur: **Thales**
**92200 Neuilly Sur Seine (FR)**

(72) Inventeurs:
• **Louis, Christian**
**91883 Massy (FR)**
• **Reynaud, Sébastien**
**91883 Massy (FR)**
• **Spery, Laurent**
**91883 Massy (FR)**

(74) Mandataire: **Blot, Philippe Robert Emile**
**Cabinet Lavoix**
**2, place d'Estienne d'Orves**
**75441 Paris Cedex 09 (FR)**

(54) **Procédé de représentation d'une erreur de localisation et dispositif associé**

(57)     Ce procédé est un procédé de représentation de l'erreur de localisation d'une pluralité de points d'une image géoréférencée, comprenant les étapes de :
- fournir une image géoréférencée, dans laquelle chaque point de coordonnées image est associé à des valeurs annoncées des coordonnées géographiques définissant la localisation géographique de l'objet correspondant au point de l'image géoréférencée ;
- représenter l'image géoréférencée.
Le procédé comprend en outre les étapes de :
- fournir, pour chaque point de la pluralité de points de l'image géoréférencée, une valeur estimée de l'erreur de localisation propre à ce point, cette erreur étant non uniforme sur l'image ; et
- représenter l'erreur de localisation pour au moins un point parmi la pluralité de points de l'image géoréférencée de manière à permettre la visualisation de l'erreur de localisation par un utilisateur.

FIG.10

## Description

La présente invention concerne un procédé de représentation de l'erreur de localisation d'une pluralité de points d'une image géoréférencée, comprenant les étapes de :

- fournir une image géoréférencée, dans laquelle chaque point de coordonnées image est associé à des valeurs annoncées des coordonnées géographiques définissant la localisation géographique de l'objet correspondant à ce point de l'image géoréférencée;
- représenter l'image géoréférencée.

Une image issue d'un capteur d'observation est dite géoréférencée lorsqu'elle est fournie accompagnée d'une fonction mathématique permettant d'effectuer une correspondance entre les points de l'image et les coordonnées géographiques des points correspondants dans le monde tridimensionnel visualisé. Il existe deux types d'images géoréférencées, les images brutes, issues directement du capteur d'observation, et les images orthorectifiées, encore appelées orthoimages, qui ont notamment été corrigées des effets du relief du terrain visualisé. Ainsi, une image orthorectifiée est une image dont la géométrie a été redressée de manière à ce que chacun de ses points soit superposable à une carte plane qui lui correspond.

Tout objet vu sur une image géoréférencée peut ainsi être localisé dans le monde tridimensionnel visualisé, encore appelé terrain. Cette localisation est cependant entachée d'erreurs, dues notamment aux circonstances de prise de vue, et au relief local du terrain visualisé.

Pour de nombreuses applications, telles que la télédétection ou la géographie numérique, il est important de connaître l'erreur faite lors de la localisation d'un point donné de l'image dans le terrain de manière à pouvoir évaluer la confiance que l'on peut avoir dans l'indication de localisation. Actuellement, les fournisseurs d'images géoréférencées fournissent ces images accompagnées de l'indication d'une erreur moyenne uniforme sur toute l'image. Or, l'erreur de localisation varie fortement au sein d'une même image. Ainsi, l'erreur moyenne peut être faible, alors qu'elle est en réalité importante dans certaines zones de l'image, qui présentent par exemple un relief escarpé, et faible dans d'autres zones, plutôt plates. L'indication d'une erreur moyenne ne permet donc pas à l'utilisateur de déterminer quelle confiance il peut accorder à la localisation géographique d'un point donné de l'image.

L'invention a pour but de proposer un système permettant à un utilisateur de déterminer de manière simple et intuitive quelle confiance il peut accorder à la localisation géographique annoncée pour chaque point d'une image géoréférencée.

A cet effet, l'invention a pour objet un procédé de représentation d'une erreur de localisation tel que défini ci-dessus, caractérisé en ce qu'il comprend en outre les étapes de :

- fournir, pour chaque point de la pluralité de points de l'image géoréférencée, une valeur estimée de l'erreur de localisation propre à ce point, cette erreur étant non uniforme sur l'image; et
- représenter l'erreur de localisation pour au moins un point parmi la pluralité de points de l'image géoréférencée de manière à permettre la visualisation de l'erreur de localisation par un utilisateur.

Selon des modes de réalisation particuliers, le procédé selon l'invention comprend l'une ou plusieurs des caractéristiques suivantes, prise(s) isolément ou suivant toute(s) combinaison(s) techniquement possible(s) :

- on représente l'erreur de localisation pour chaque point de la pluralité de points de l'image géoréférencée ;
- l'erreur de localisation est représentée sur l'image géoréférencée elle-même ;
- l'image géoréférencée et l'erreur de localisation sont affichées par l'intermédiaire de moyens d'affichage, l'erreur de localisation étant affichée sur l'image géoréférencée de manière intermittente ;
- l'erreur de localisation d'un point d'une image géoréférencée s'affiche lorsque l'utilisateur sélectionne ledit point ;
- on produit une carte d'erreur, ladite carte d'erreur représentant l'erreur de localisation pour la pluralité de points de l'image géoréférencée, et la représentation de l'erreur de localisation consiste à représenter ladite carte d'erreur ;
- la carte d'erreur est représentée superposée sur l'image géoréférencée de manière à former une image combinée, dans laquelle l'erreur de localisation associée à chacun de la pluralité de points est représentée par un premier paramètre et l'objet représenté par ce point est représenté par un deuxième paramètre ;
- la carte d'erreur et l'image géoréférencée sont affichées par l'intermédiaire de moyens d'affichage, et l'affichage de la carte d'erreur sur l'image géoréférencée est intermittent, la carte d'erreur étant affichée de manière clignotante avec une fréquence de clignotement inférieure à la fréquence de rémanence rétinienne, c'est-à-dire comprise entre 0,5 et 20 Hz.

L'invention a également pour objet un dispositif de représentation de l'erreur de localisation d'une pluralité de points d'une image géoréférencée, lequel comprend :

- des moyens pour fournir une image géoréférencée, dans laquelle chaque point de coordonnées image est associé à des valeurs annoncées des coordonnées géographiques définissant la localisation géographique de l'objet correspondant à ce point de l'image géoréférencée ;

- des moyens pour représenter l'image géoréférencée ;

  le dispositif étant caractérisé en ce qu'il comprend en outre :

- des moyens pour fournir, pour chaque point de la pluralité de points de l'image géoréférencée, une valeur estimée de l'erreur de localisation propre à ce point, cette erreur étant non uniforme sur l'image ; et

- des moyens pour représenter l'erreur de localisation pour au moins un point parmi la pluralité de points de l'image géoréférencée de manière à permettre la visualisation de l'erreur de localisation par un utilisateur.

L'invention sera mieux comprise à la lecture de la description qui va suivre, donnée uniquement à titre d'exemple et faite en se référant aux dessins annexés, sur lesquels :

- la figure 1 illustre un dispositif pour la détermination d'une erreur de localisation ;
- la figure 2 est une représentation schématique de la relation entre une image brute géoréférencée et le terrain ;
- la figure 3 est une représentation schématique du procédé de détermination d'une erreur de localisation selon un premier mode de réalisation ;
- la figure 4 est une représentation schématique du procédé selon une première variante d'un deuxième mode de réalisation ;
- la figure 5 est une représentation schématique du procédé selon une deuxième variante du deuxième mode de réalisation ;
- la figure 6 est une représentation schématique de la relation entre une image orthorectifiée et une image brute correspondante ;

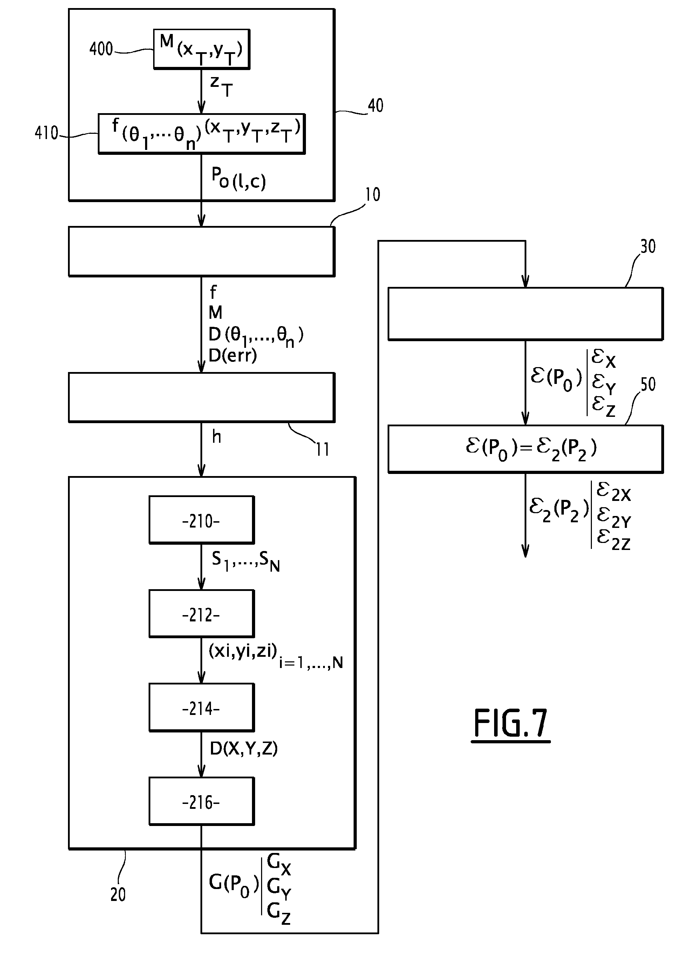

- la figure 7 est une représentation schématique du procédé selon un troisième mode de réalisation ;
- la figure 8 illustre un dispositif pour la détermination d'une erreur de localisation selon le troisième mode de réalisation ;
- la figure 9 est une représentation schématique d'un dispositif de représentation de l'erreur de localisation de chaque point d'une image géoréférencée ;
- la figure 10 est une représentation schématique du procédé de représentation de l'erreur de localisation de chaque point d'une image géoréférencée ;
- la figure 11 est une représentation d'images représentées par le dispositif de la figure 9 selon un mode de réalisation, l'image supérieure étant une image géoréférencée, et l'image inférieure étant une carte d'erreur correspondante ; et
- la figure 12 est une représentation d'une image représentée par le dispositif de la figure 9 selon un autre mode de réalisation, la carte d'erreur étant superposée à l'image géoréférencée.

La localisation géographique d'un point P dans le terrain T est définie par des coordonnées terrain X, Y, Z. Les coordonnées terrain X, Y, Z peuvent être définies dans tout système de coordonnées adapté pour définir la localisation d'un objet dans le terrain T. Classiquement, on peut citer des référentiels euclidiens tels que le référentiel euclidien 3D centré en le centre de la terre, on peut citer les systèmes de coordonnées géographiques où les coordonnées planimétriques sont angulaires sur un ellipsoïde de référence représentant la terre (coordonnées latitude et longitude) et la coordonnée altimétrique est linéaire et mesurée selon la normale locale à l'ellipsoïde de référence en le point considéré, puis finalement on peut citer les systèmes de coordonnées projetés, non euclidiens mais métriques, où les coordonnées planimétriques sont exprimées en mètres, traduites des coordonnées géographiques à l'aide d'une formule de projection, la plupart du temps conforme (par exemple les projections Mercator, Mercator Transverse, Universal Transverse Mercator, projection conique Lambert, projection stéréographique, ...) et où la coordonnée verticale est construite comme pour les référentiels géographiques cités ci-dessus (latitude, longitude, hauteur). Il est à noter que l'on peut changer de repère, euclidien, géographique ou cartographique, sans changer la substance de l'invention. Pour résumer et pour les besoins stricts de l'invention, il suffit d'envisager un triplet de nombres X,Y,Z qui déterminent de façon unique la localisation de tout point de la surface terrestre. Par la suite, ces coordonnées seront appelées coordonnées terrain.

Dans la suite de la description, les coordonnées terrain X, Y, Z sont des coordonnées géographiques, comprenant en particulier des coordonnées planimétriques X, Y et une coordonnée altimétrique Z.

L'image dont on cherche à déterminer l'erreur de localisation est une image géoréférencée, c'est-à-dire que chaque point de l'image est associé à des valeurs annoncées $X_T$, $Y_T$, $Z_T$ des coordonnées terrain, qui définissent la localisation géographique dans le terrain T de l'objet représenté par ce point de l'image. Ainsi, on associe un point P du terrain de coordonnées $X_T$, $Y_T$, $Z_T$ à chaque point de l'image géoréférencée.

On appelle erreur de localisation l'erreur sur la localisation d'un point de l'image dans le terrain T. Cette erreur résulte principalement d'incertitudes liées :

(i) au capteur d'observation ; et
(ii) à la connaissance que l'on a sur la représentation de la surface terrestre, autrement dit sur la relation mathématique définissant le terrain, cette relation reliant soit implicitement soit explicitement entre elles les coordonnées X, Y, Z des points de la surface terrestre. Cette relation est appelée par la suite modèle de terrain M. Elle s'exprime de la manière suivante : M(X,Y,Z)=0 ou plus classiquement M(X, Y)=Z.

L'erreur de localisation s'exprime, pour chaque point de l'image, en unités de longueur, par exemple en mètres, autour des coordonnées terrain annoncées, c'est-à-dire autour de la localisation géographique annoncée pour ce point.

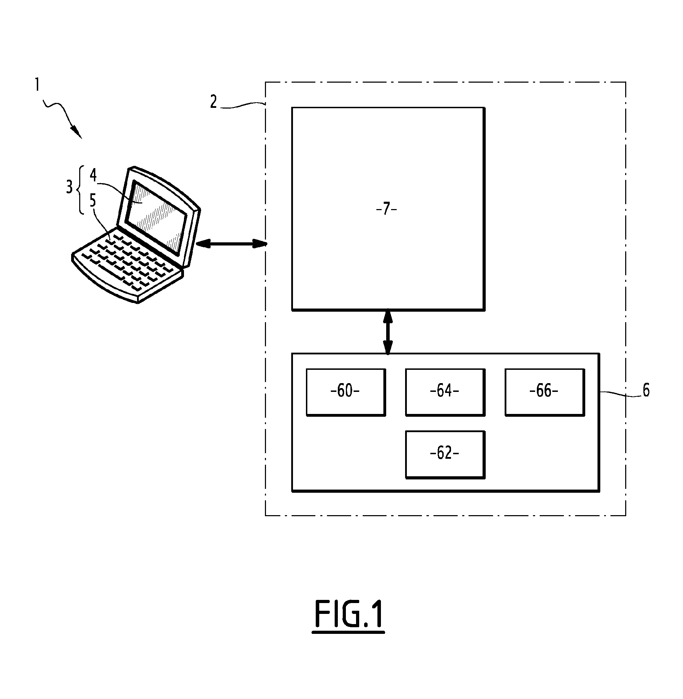

On a représenté sur la figure 1 un dispositif 1 pour la détermination de l'erreur de localisation ε d'un point d'une image géoréférencée. Selon un mode de réalisation, le dispositif 1 comprend une unité de traitement et de stockage 2 et des moyens d'interface 3 entre cette unité 2 et un utilisateur. Les moyens d'interface 3 comprennent un dispositif d'affichage 4, par exemple un écran, et des périphériques d'entrée 5, par exemple une souris et/ou un clavier. Les moyens d'interface 3 sont reliés à l'unité de traitement et de stockage 2 et permettent par exemple à l'utilisateur d'agir sur une image affichée par l'intermédiaire du dispositif d'affichage 4. L'unité de traitement et de stockage 2 comprend un calculateur 6, par exemple un microprocesseur d'un ordinateur mettant en oeuvre un programme et des moyens de stockage 7, par exemple une mémoire de l'ordinateur.

Les étapes du procédé de détermination de l'erreur de localisation sont mises en oeuvre par le dispositif 1 sous la commande du programme d'ordinateur.

Dans un premier mode de réalisation de l'invention, l'image considérée est une image brute $A_0$. L'image brute $A_0$ est de manière classique une image issue directement d'un capteur d'observation sans aucun prétraitement géométrique. Le capteur d'observation utilisé pour acquérir l'image brute $A_0$ peut être de tout type. Il s'agit notamment d'un capteur radar, lidar, infrarouge ou électro-optique ou d'un capteur de vision multispectrale ou hyperspectrale. De tels capteurs sont par exemple intégrés à des satellites d'observation, des drones de reconnaissance, des appareils photos ou embarqués dans des avions.

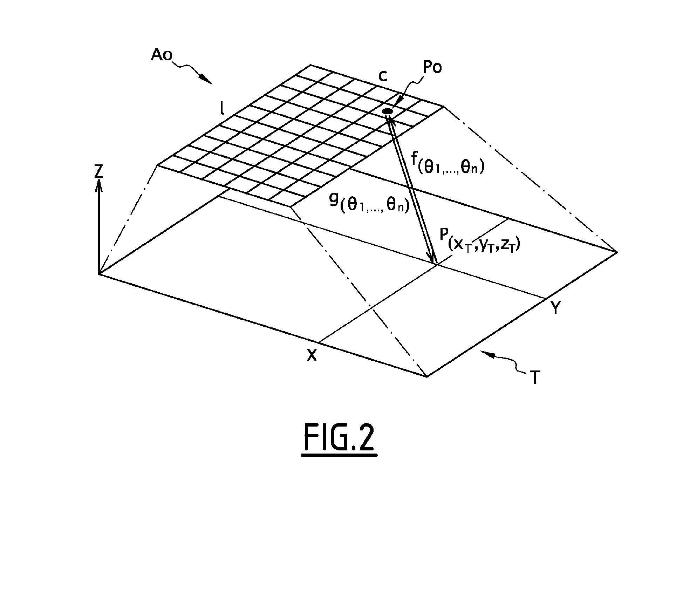

Chaque point $P_0$ de l'image brute $A_0$ est identifié au sein de l'image brute $A_0$ par des coordonnées image 1, c définissant sa position dans l'image brute $A_0$. Les valeurs des coordonnées image 1, c sont des nombres réels. Comme illustré sur la figure 2, chaque point $P_0$ de l'image brute $A_0$ est associé à une valeur annoncée $X_T$, $Y_T$, $Z_T$ de chaque coordonnée géographique définissant la localisation géographique de l'objet représenté par le point $P_0$ de l'image brute $A_0$ dans le terrain T. Ainsi, dans une image brute $A_0$ géoréférencée, chaque point $P_0$ est associé à un point P du terrain T de coordonnées $X_T$, $Y_T$, $Z_T$.

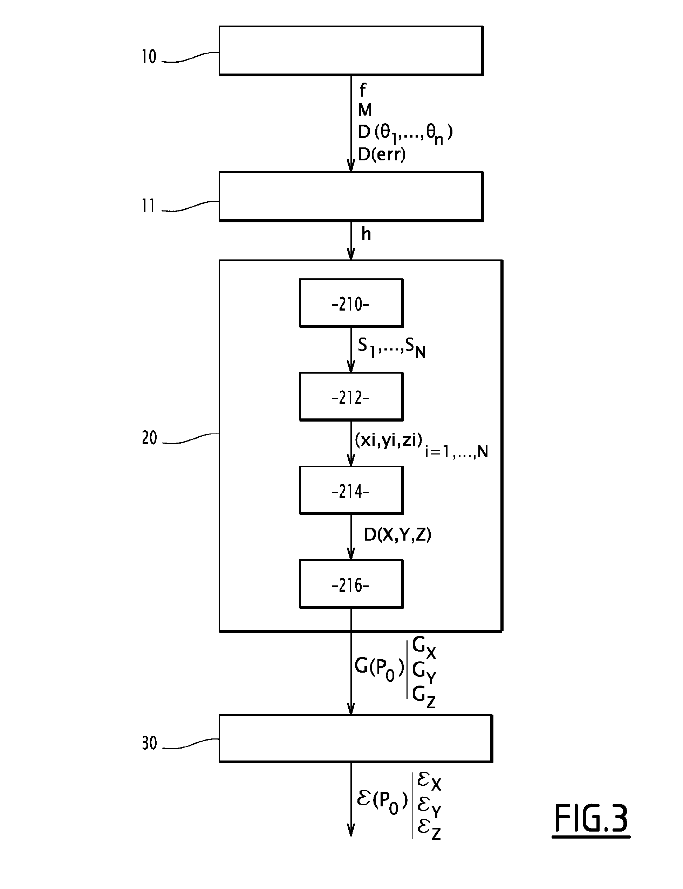

La figure 3 illustre de manière schématique le procédé de détermination de l'erreur de localisation du point $P_0$ de l'image brute $A_0$, ce procédé étant par exemple mis en oeuvre par le dispositif 1 sous la commande du programme d'ordinateur.

Dans une étape 10 du procédé, on fournit une fonction de prise de vue f associée à l'image brute $A_0$,

ainsi qu'un modèle de terrain M tel que défini ci-dessus.

La fonction de prise de vue f est une fonction non linéaire. Elle associe au point P de coordonnées géographiques X, Y, Z dans le terrain T un point $P_0$ correspondant de l'image brute $A_0$ de coordonnées 1, c dans l'image brute $A_0$. Elle s'exprime de la manière suivante :

$$f_{(\theta_1,...,\theta_n)}(X,Y,Z) = (l,c)\,,$$

où

X, Y et Z sont les coordonnées géographiques du point P du terrain T;

c et l sont les coordonnées du point $P_0$ correspondant dans l'image brute $A_0$; et $\theta_1,...,\theta_n$ sont des grandeurs dépendant des conditions de prise de vue.

Dans la suite, on nomme vecteur θ le vecteur dont les composantes sont les grandeurs $\theta_1, ..., \theta_n$. Ainsi, $\theta = (\theta_1, \theta_2, ..., \theta_n)$. On nomme en outre vecteur de localisation géographique V le vecteur dont les coordonnées sont les coordonnées géographiques X, Y, Z. Ainsi, V = (X, Y, Z).

Les grandeurs $\theta_1, ..., \theta_n$ sont des variables aléatoires dont on connaît la loi de probabilité jointe D $(\theta_1,...,\theta_n)$. La loi jointe $D(\theta_1,...,\theta_n)$ est soit fournie par le producteur de l'image brute $A_0$, soit déductible par le calculateur 6 à partir des informations fournies par le producteur de l'image brute $A_0$.

Ainsi, le producteur de l'image brute $A_0$ fournit par exemple le type de la loi jointe, ainsi que les moments d'ordre 1 et 2, c'est-à-dire l'espérance de la loi, accompagnée de données d'incertitude généralement sous la forme d'une matrice de covariance des grandeurs $\theta_1,..., \theta_n$.

Dans le cas où les grandeurs $\theta_1, ..., \theta_n$ sont des variables aléatoires indépendantes et identiquement distribuées, les données d'incertitude sont par exemple l'écart-type ou la variance de chaque grandeur $\theta_1, ..., \theta_n$ autour de son espérance.

Dans le cas où la loi de probabilité $D(\theta_1, ..., \theta_n)$ n'est pas fournie, le vecteur θ est supposé être un vecteur gaussien, i.e. où toute combinaison linéaire des variables $\theta_1, ..., \theta_n$ suit une loi de Gauss. Dans ce cas, les moments d'ordre 1 et 2 pour chaque variable $\theta_1, ..., \theta_n$ suffisent à définir la loi de probabilité jointe sous cette hypothèse gaussienne.

Dans le cadre du procédé selon l'invention, toutes les grandeurs $\theta_1, ..., \theta_n$ sont des variables aléatoires. L'invention permet d'intégrer les constantes. Elles sont définies alors par des coefficients nuls dans la matrice de covariance sur les ligne et colonne les concernant.

Les grandeurs $\theta_1, ..., \theta_n$ comprennent par exemple des caractéristiques de positionnement du capteur d'observation lors de l'acquisition de l'image brute $A_0$, telles que sa position et son orientation lors de l'acquisition de l'image brute $A_0$, ainsi que des caractéristiques physiques du capteur d'observation ayant acquis

l'image brute $A_0$, telles que la taille des matrices réceptrices ou la distance focale.

Les coordonnées géographiques X, Y et Z de localisation du point P du terrain T associé au point $P_0$ de l'image brute $A_0$ dépendent des grandeurs $\theta_1$, ..., $\theta_n$ notamment par l'intermédiaire de la fonction de prise de vue f. Ces coordonnées géographiques X, Y et Z sont donc des variables aléatoires de loi jointe D(X, Y, Z). Les valeurs annoncées $X_T$, $y_T$ et $z_T$ des coordonnées géographiques associées au point $P_0$ dans l'image brute $A_0$ géoréférencée constituent des observations particulières des coordonnées géographiques X, Y et Z.

La fonction de prise de vue f d'une image brute $A_0$ est généralement fournie avec l'image brute $A_0$.

La fonction de prise de vue f est, selon un mode de réalisation, un modèle physique de prise de vue, qui est une traduction directe de la prise de vue du capteur. Des exemples de modèles de prise de vue sont le modèle conique, qui correspond à une matrice de récepteurs CCD ou CMOS et représente la prise de vue classique d'un appareil photo à plan focal, le modèle « pushbroom », qui représente un capteur dans lequel les récepteurs sont organisés le long d'une barrette unidimensionnelle, et le modèle « whiskbroom », qui représente un capteur dans lequel le récepteur est réduit à une cellule dont le mouvement rapide permet de former une image.

En variante, la fonction de prise de vue f est un modèle de remplacement purement analytique. Dans ce cas, les grandeurs $\theta_1$, ..., $\theta_n$ ne sont pas chacune directement liées à un paramètre physique de la prise de vue, comme cela est le cas dans le modèle physique de prise de vue, mais sont traduites dans leur ensemble des conditions de prise de vue par le producteur du modèle de remplacement. Des exemples de modèles de remplacement sont de manière classique le modèle polynôme, le modèle fractions rationnelles ou le modèle grille. Pour ce type de modèle, le producteur fournit une matrice de covariance pour le vecteur θ.

Le modèle de terrain M fourni à l'étape 10 donne, dans le mode de réalisation décrit, pour tout point P du terrain T, la coordonnée altimétrique Z en fonction des coordonnées planimétriques X et Y. Il est muni d'un modèle d'erreur err(X, Y), modélisant l'erreur du modèle de terrain M comme un champ aléatoire dont on connaît la loi de probabilité D(err).

Ainsi, le modèle de terrain M s'exprime de la manière suivante :

$$Z = M(X,Y) + err(X,Y),$$

où

Z est la coordonnée altimétrique d'un point P du terrain T, X et Y sont les coordonnées planimétriques de ce point P, err(X,Y) est l'erreur du modèle de terrain M.

Le modèle de terrain M est par exemple un modèle numérique de surface (MNS) ou un modèle numérique d'élévation (MNE), ces deux modèles donnant des informations de relief relatives au sursol. En variante, il s'agit d'un modèle numérique de terrain (MNT) qui donne des informations de relief relatives au sol nu. Dans les cas les plus pauvres en information de terrain, ce modèle de terrain M peut se réduire à un géoïde terrestre, c'est-à-dire à une équipotentielle du champ de pesanteur terrestre coïncidant avec le niveau moyen des mers, ou bien encore à un simple modèle géométrique de la terre qui peut être soit un ellipsoïde de révolution comme par exemple le « WGS84 » World Geodetic System produit par le National Imagery Mapping Agency (NIMA) américain ou bien une simple sphère de rayon terrestre moyen ou même une modélisation dite de terre plate où la fonction M est constante.

Le champ d'erreur err(X,Y) étant a priori une réalisation quelconque de la loi d'erreur D(err), il sera modélisé par la suite à l'aide de tirages Monte Carlo du modèle de terrain M et pour chaque tirage, l'erreur de terrain sera intégrée dans le modèle M tiré. A cet effet, on génère par la méthode de Monte-Carlo, à l'aide de la loi de probabilité D(err) du modèle d'erreur err(X, Y), un ensemble d'observations du modèle de terrain M de telle manière que cet ensemble obéisse à la loi de probabilité D(err) du modèle d'erreur err(X, Y). Ces tirages de Monte-Carlo sont par exemple réalisés au moyen d'un algorithme fondé sur des méthodes à base de transformée de Fourier.

Le modèle de terrain M tel que fourni classiquement par un producteur de donnée est un cas particulier. Il correspond à la réalisation identiquement nulle du champ d'erreur err(X,Y).

Dans une étape 11 du procédé, on inverse la fonction de prise de vue f par toute méthode adaptée, par exemple par la méthode de lancer de rayon, à l'aide du modèle de terrain M, de manière à obtenir une relation de localisation h.

A cet effet, on résout de manière implicite le système suivant, les coordonnées image 1, c du point $P_0$ de l'image brute $A_0$ étant fixées :

$$f_{(\theta_1,...,\theta_n)}(X,Y,M(X,Y)) = (l,c).$$

La relation de localisation h est modélisée comme dépendant d'un champ aléatoire. Chaque réalisation de la relation de localisation h est appelée fonction de localisation g. Chaque fonction de localisation g correspond à une réalisation du champ d'erreur err(X,Y), c'est-à-dire par exemple à un tirage de Monte-Carlo particulier du champ d'erreur err(X, Y).

La relation de localisation h contient implicitement, du fait de son procédé d'obtention, le modèle de terrain M sous l'hypothèse qu'un tirage Monte Carlo du champ d'erreur err(X,Y) du modèle de terrain M ait été effectué.

Chaque fonction de localisation g, c'est-à-dire chaque réalisation de la relation de localisation h, est une fonction non nécessairement linéaire. Elle donne, pour chaque point $P_0$ de l'image brute $A_0$, au moins certaines des coordonnées géographiques X, Y, Z de localisation associées à ce point $P_0$ en fonction des grandeurs $\theta_1$, ..., $\theta_n$ dépendant des conditions de prise de vue. En particulier chaque fonction de localisation g donne, pour chaque point $P_0$ de l'image brute $A_0$, les trois coordonnées géographiques X, Y, Z de localisation associées à ce point $P_0$ en fonction des grandeurs $\theta_1$, ..., $\theta_n$ dépendant des conditions de prise de vue.

Dans une étape 20 du procédé, on estime, pour le point $P_0$ de coordonnées I, c de l'image brute $A_0$, la valeur d'une grandeur statistique G caractéristique de la loi de probabilité D(X, Y, Z) des coordonnées géographiques X, Y, Z associées au point $P_0$ de l'image brute $A_0$ à l'aide de :

- la loi de probabilité D($\theta_1$, ..., $\theta_n$) du vecteur $\theta$ ; et de
- l'une au moins des fonctions de localisation g, la ou chaque fonction de localisation g étant appliquée au point $P_0$ de coordonnées I, c de l'image brute $A_0$. Chaque fonction de localisation g correspond à une réalisation particulière de la relation de localisation h, c'est-à-dire à un tirage de Monte-Carlo donné de l'erreur de terrain err(X, Y).

Avantageusement, on estime la grandeur statistique G à partir de chaque fonction de localisation g obtenue par tirages de Monte-Carlo de l'erreur de terrain err(X, Y).

La grandeur statistique G comprend par exemple une composante $G_X$, $G_Y$, $G_Z$ selon chacune des coordonnées géographiques X, Y, Z. Elle est représentative de la dispersion des coordonnées géographiques X, Y et Z autour de leurs valeurs annoncées respectives $x_T$, $y_T$, $z_T$.

Elle comprend, selon un mode de réalisation, l'écart-type de chacune des coordonnées géographiques X, Y et Z autour de leurs valeurs annoncées respectives $x_T$, $y_T$ et $z_T$. Pour la coordonnée géographique X, cet écart-type est par exemple calculé par la formule :

$$G_X = \sqrt{\frac{1}{n} \times \sum_{i=1}^{n} (x_i - x_T)^2} \; ,$$

où

$x_i$ est une observation de la coordonnée géographique X ;

$x_T$ est la valeur annoncée de la coordonnée géographique X ;

n correspond au nombre d'observations effectuées.

L'écart type est calculé de manière analogue pour les coordonnées géographiques Y et Z.

Selon des variantes ou en option, d'autres grandeurs statistiques G peuvent être calculées parmi tout l'attirail des indicateurs de dispersion bien connus. On peut citer les critères très utilisés des statistiques d'ordre correspondant aux erreurs à n% où n est compris entre 0 et 100. L'erreur à 50% est appelée médiane et la valeur à 90% est souvent utilisée. La façon classique de les calculer est bien connue de l'homme du métier (par exemple par tri des erreurs et calcul du maximum des erreurs parmi les n% les plus petites).

En variante ou en option, la grandeur statistique G comprend une composante planimétrique $G_P$, représentative de la dispersion des coordonnées planimétriques X et Y autour de leurs valeurs annoncées $x_T$, $y_T$, et une composante altimétrique $G_Z$, représentative de la dispersion de la coordonnée altimétrique Z autour de sa valeur annoncée $z_T$.

Selon le premier mode de réalisation, la grandeur statistique G est estimée pour le point $P_0$ de l'image brute $A_0$ par l'intermédiaire de la méthode de Monte-Carlo, en mettant en place des tirages de Monte-Carlo selon les lois des grandeurs $\theta_1$, ..., $\theta_n$ au travers de l'au moins une fonction de localisation g.

A cet effet, dans une sous-étape 210 de l'étape 20, on génère à l'aide de la loi de probabilité D($\theta_1$, ...,$\theta_n$) du vecteur $\theta$ fournie à l'étape 10 un ensemble de N observations $S_1$, ..., $S_N$ du vecteur $\theta$. Les observations $S_1$, ..., $S_N$ sont choisies par des algorithmes connus de l'homme du métier de manière à ce que l'ensemble des observations $S_1$, ..., $S_N$ obéisse à la loi de probabilité D($\theta_1$, ...,$\theta_n$) du vecteur $\theta$. Ces algorithmes sont par exemple des algorithmes fondés sur les méthodes d'acceptation-rejet ou sur des méthodes à base de chaîne de Markov, ces méthodes étant bien connues de l'homme du métier.

La taille de l'ensemble, c'est-à-dire le nombre N d'observations $S_1$, ..., $S_N$ est choisie par l'homme du métier, notamment en fonction de la précision de l'estimation recherchée et du nombre n de grandeurs $\theta_1$, ..., $\theta_n$, c'est-à-dire de la dimension du vecteur $\theta$. Le nombre N d'observations du vecteur $\theta$ est classiquement supérieur à 1000.

Dans une sous-étape 212 de l'étape 20, on détermine, pour le point $P_0$ de l'image brute $A_0$ de coordonnées I, c données, le résultat de chacune des N observations $S_1$, ..., $S_N$ par l'au moins une fonction de localisation g. Chaque résultat correspond à une observation $x_i$, $y_i$, $z_i$ des coordonnées géographiques X, Y, Z. On obtient ainsi, à l'issue de l'étape 212, un ensemble de N observations $x_i$, $y_i$, $z_i$ des coordonnées géographiques X, Y, Z pour chaque fonction de localisation g. En variante, on obtient un ensemble d'observations $x_i$, $y_i$, $z_i$ des coordonnées géographiques X, Y, Z pour toutes les fonctions de localisation g obtenues par tirages de Monte-Carlo de l'erreur de terrain err(X, Y).

Dans une sous-étape 214 de l'étape 20, on estime la loi de probabilité D(X, Y, Z) des coordonnées X, Y et Z à partir du ou des ensembles d'observations $x_i$, $y_i$

et $z_i$ des coordonnées géographiques X, Y, Z obtenus à la sous-étape 212.

Dans une sous-étape 216 de l'étape 20, on déduit la grandeur statistique G de la loi de probabilité D (X, Y, Z) des coordonnées géographiques X, Y et Z. En particulier, on déduit chacune des composantes $G_X$, $G_Y$, $G_Z$ de la grandeur statistique G relative respectivement à la coordonnée géographique X, Y, Z de la loi de probabilité D(X, Y, Z).

En option, on déduit également les espérances E(X), E(Y) et E(Z) des coordonnées géographiques X, Y, Z de la loi de probabilité D(X, Y, Z).

Dans une étape 30, on déduit de la valeur de la grandeur statistique G l'erreur de localisation du point $P_0$ de l'image brute $A_0$. Selon un mode de réalisation, l'erreur de localisation géographique ε est identifiée, pour chaque coordonnée géographique X, Y, Z à la composante $G_X$, $G_Y$, $G_Z$ correspondante de la grandeur statistique G déterminée à l'étape 20.

Selon une variante, l'erreur de localisation ε comprend une composante planimétrique $\varepsilon_p$, dépendant des coordonnées planimétriques X et Y. Cette composante planimétrique est par exemple obtenue à partir des composantes $G_X$ et $G_Y$ de la grandeur statistique G relatives respectivement aux coordonnées planimétriques X et Y déterminées à l'étape 20, par application de la formule suivante : $G_p = \sqrt{G_X^2 + G_Y^2}$ . En variante, elle est obtenue directement à partir de la composante planimétrique $G_p$ de la grandeur statistique G.

En option, l'erreur de localisation ε comprend en outre une composante altimétrique $\varepsilon_z$ dépendant de la coordonnée altimétrique Z. La composante altimétrique $\varepsilon_z$ est par exemple identifiée à la composante $G_z$ de la grandeur statistique G relative à la coordonnée altimétrique Z déterminée à l'étape 20.

Avantageusement, on enregistre la loi de probabilité D(X, Y, Z) des coordonnées géographiques X, Y, Z, associées au point $P_0$, par exemple dans les moyens de stockage 7.

En variante ou en option, on enregistre la grandeur statistique G associée au point $P_0$, par exemple l'écart type des coordonnées géographiques X, Y, Z autour de leurs valeurs annoncées $x_T$, $y_T$, $z_T$. En option, on enregistre en outre les espérances E(X), E(Y) et E(Z) des coordonnées géographiques X, Y, Z.

Avantageusement, les étapes 10 à 30 sont mises en oeuvre pour chaque point $P_0$ de l'image brute $A_0$ de manière à déterminer l'erreur de localisation ε de chaque point $P_0$ de l'image brute $A_0$ géoréférencée.

La mise en place de tirages de Monte-Carlo du champ d'erreur err(X, Y) du modèle de terrain M améliore la précision de l'estimation de l'erreur de localisation ε, puisque l'erreur estimée tient compte de l'erreur sur le modèle de terrain M.

En outre, l'utilisation de la méthode de Monte-Carlo permet d'obtenir une bonne estimation des lois de probabilité des coordonnées géographiques X, Y et Z. Elle nécessite cependant un nombre de calculs important et demande donc un temps de calcul long.

Le procédé selon un deuxième mode de réalisation ne diffère du procédé selon le premier mode de réalisation qu'en ce que l'erreur de terrain err(X,Y) n'est pas prise en compte. En d'autres termes, on considère que l'erreur sur le modèle de terrain M est nulle. Dans ce cas, on ne réalise pas de tirages de Monte-Carlo sur l'erreur de terrain err(X,Y), c'est-à-dire que la loi de probabilité D(err) est considérée identiquement nulle. Dans ce cas, la relation de localisation h déterminée à l'étape 11 est déterministe. On l'appelle fonction de localisation g. Toutes les autres étapes sont identiques aux étapes du procédé selon le premier mode de réalisation, si ce n'est qu'elles sont appliquées à l'unique fonction de localisation g, plutôt qu'à la pluralité de fonctions de localisation g.

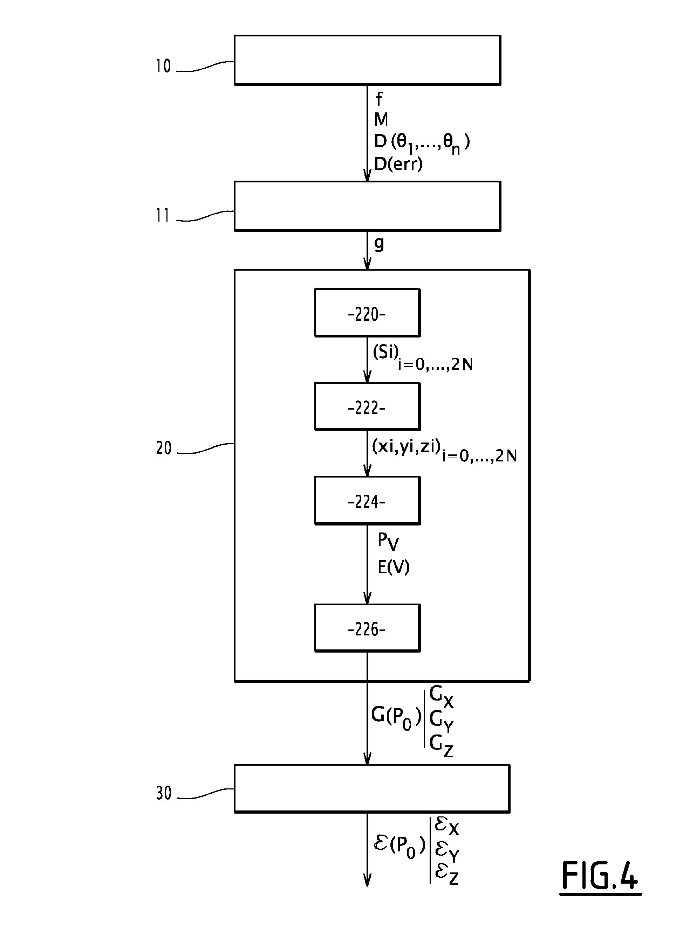

Le procédé de détermination de l'erreur de localisation ε selon une première variante des premier et deuxième modes de réalisation est illustré sur la figure 4. Il ne diffère des procédés selon le premier et le deuxième mode de réalisation de l'invention que par la méthode d'estimation de la grandeur statistique G utilisée à l'étape 20. En effet, dans la première variante, la grandeur statistique G est estimée par l'intermédiaire d'une méthode fondée sur une approche sigma-point.

A cet effet, dans une sous-étape 220 de l'étape 20, on choisit un ensemble de sigma points $S_i$, où chaque sigma point $S_i$ est une observation du vecteur θ. Des poids $\omega_i^m$ et $\omega_i^c$ sont affectés à chaque sigma point $S_i$. L'ensemble des sigma points $S_i$ est choisi de manière à ce que la moyenne et la matrice de covariance calculées par moyenne pondérée à partir de ces sigma points $S_i$ correspondent respectivement à l'espérance E(θ) et à la matrice de covariance $P_\theta$ du vecteur θ.

Les sigma points $S_i$ sont générés de manière itérative, par exemple à l'aide des équations suivantes :

$$S_0 = E(\theta)$$

$$S_i = E(\theta) + \varsigma(\sqrt{P_\theta})_i \quad \text{pour i=1,...,n}$$

$$S_i = E(\theta) - \varsigma(\sqrt{P_\theta})_i \quad \text{pour i=n+1,...,2n}$$

où

ς est un facteur d'échelle scalaire qui détermine la dispersion des sigma points Si autour de l'espérance E(θ) du vecteur θ ; $(\sqrt{P_\theta})_i$ désigne la $i^{ème}$ colonne de la racine carrée de la matrice de covariance $P_\theta$.

Les valeurs du facteur d'échelle ç et des poids $\omega_i^{m,c}$ dépendent du type d'approche sigma point utilisée. Selon un mode de réalisation, on utilise la transformation sans parfum (« unscented transformation» en anglais) comme type d'approche sigma point. La méthode pour choisir les sigma points $S_i$ à l'aide de la transformation sans-parfum est connue de l'homme du métier, et est notamment décrite dans l'article Sigma-Point Kalman Filters for Probabilistic Inference in Dynamic State-Space Models, Rudolph van der Merwe, PhD Thesis, Avril 2004. Tout autre type d'approche sigma point adapté peut également être utilisé dans le cadre du procédé selon l'invention.

Dans une sous-étape 222 du procédé selon la première variante, on propage les sigma-points $S_i$ choisis à l'étape 220 à travers la fonction de localisation g.

A cet effet, on utilise par exemple les équations suivantes :

$$V_i = g(S_i)$$

$$E(V) \approx \sum_{i=0}^{2L} \omega_i^m V_i$$

$$P_V \approx \sum_{i=0}^{2L} \sum_{j=0}^{2L} \omega_{i,j}^c v_i v_j^T$$

où

$\omega_i^m$ et $\omega_i^c$ sont des poids scalaires dont la valeur dépend du type de d'approche sigma point utilisée.

On obtient ainsi un ou plusieurs ensembles d'observations $x_i$, $y_i$, $z_i$ des coordonnées géographiques X, Y, Z.

On obtient en outre la matrice de covariance $P_v$ des coordonnées géographiques X, Y, Z et optionnellement l'espérance E(X), E(Y), E(Z) de chacune des coordonnées géographiques X, Y, Z.

En option, on estime, dans une sous-étape 224, une matrice de covariance P des coordonnées planimétriques X, Y à partir du bloc extrait de la matrice $P_v$ correspondant aux coordonnées X,Y et, optionnellement, l'espérance E(X), E(Y) de chacune des coordonnées planimétriques X et Y. On estime en outre dans cette sousétape 224 la variance de la coordonnée altimétrique Z à partir du terme diagonal $P_{v3,3}$ correspondant de la matrice de covariance $P_v$.

Dans une sous-étape 226, on estime la grandeur statistique G à partir de l'ensemble d'observations $x_i$, $y_i$, $z_i$ des coordonnées géographiques X, Y, Z, et en particulier à partir de la matrice de covariance $P_v$. L'écart-

type de chaque coordonnée géographique X, Y, Z est alors déduit des racines carrées des valeurs de la diagonale de la matrice $P_v$.

Dans le cas où l'on estime la grandeur statistique planimétrique $G_p$ relative aux coordonnées planimétriques X et Y, on utilise la formule :

$$G_p = \sqrt{P v_{1,1} + P v_{2,2}} \ ,$$

où $P_{v1,1}$ et $P_{v2,2}$ correspondent respectivement aux termes diagonaux de la matrice $P_v$ relatifs à la coordonnée géographique X et à la coordonnée géographique Y.

La composante altimétrique $G_z$ de la grandeur statistique G correspond à la racine carrée du terme diagonal $P_{v3,3}$ de la matrice **$P_v$** relatif à la coordonnée géographique altimétrique Z.

A l'étape 30, l'erreur de localisation ε est déduite de la grandeur statistique G de la même manière que dans le premier ou le deuxième mode de réalisation.

L'utilisation de la méthode basée sur l'approche sigma point présente l'avantage de donner une approximation correcte de l'espérance et de la variance des coordonnées géographiques X, Y, Z pour un temps de calcul instantané.

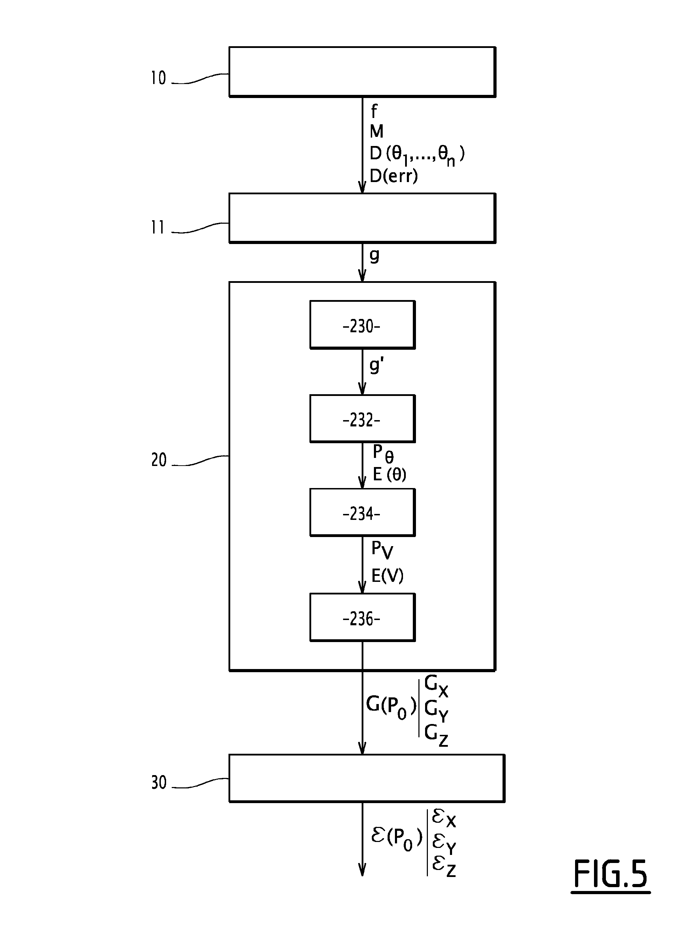

Le procédé de détermination selon une deuxième variante, illustré sur la figure 5, ne diffère du procédé selon le premier ou le deuxième mode de réalisation de l'invention que par la méthode d'estimation de la grandeur statistique G utilisée à l'étape 20. En effet, dans la deuxième variante, la grandeur statistique G est estimée par linéarisation de la fonction de localisation g.

A cet effet, dans une sous-étape 230 de l'étape 20, on linéarise la fonction de localisation g pour obtenir une fonction de localisation linéarisée g' autour du point θ considéré.

Dans une sous-étape 232, on fournit ou on détermine, à partir de la loi de probabilité $D(\theta_1,...,\theta_n)$ du vecteur θ, la matrice de covariance $P_\theta$ du vecteur θ, et optionnellement l'espérance E(θ).

Dans une sous-étape 234, on propage la matrice de covariance Pθ à travers la fonction de localisation linéarisée g'. A cet effet, on utilise par exemple l'équation :

$$P = \nabla g P_\theta (\nabla g)^T$$

où $\nabla_g$ est le gradient de g.

On obtient ainsi une estimation de la matrice de covariance $P_v$ des coordonnées géographiques X ,Y et Z.

En option, à la sous-étape 234, on propage l'espérance E(θ) du vecteur θ à travers la fonction de localisation g selon l'équation $\begin{pmatrix} E(X) \\ E(Y) \\ E(Z) \end{pmatrix} = g(E_\theta)$ , où E(X), E(Y) et E(Z) sont les espérances des coordonnées planimétriques X et Y et altimétrique Z.

On obtient ainsi une estimation de l'espérance E(X), E(Y), E(Z) de chacune des coordonnées géographiques X, Y et Z.

Dans une sous-étape 236, on déduit la grandeur statistique G de la matrice de covariance $P_v$ des coordonnées géographiques X, Y et Z. La grandeur statistique G comprend en particulier l'écart-type de chacune des coordonnées géographiques X, Y et Z autour de sa valeur annoncée respective $x_T$, $y_T$ et $z_T$.

On déduit cette grandeur statistique G à partir de la matrice de covariance $P_v$ de la même manière que dans la première variante.

A l'étape 30, l'erreur de localisation est déduite de la grandeur statistique G de la même manière que dans le deuxième mode de réalisation.

Le procédé selon la deuxième variante présente l'avantage d'être plus rapide à mettre en oeuvre que les procédés selon les premier et deuxième modes de réalisation et selon la première variante. En revanche, l'erreur de localisation obtenue est moins précise du fait de l'utilisation de la fonction de localisation linéarisée g'.

Les procédés selon la première et la deuxième variante sont avantageusement mis en oeuvre en tant que variantes du procédé selon le deuxième mode de réalisation, dans lequel on ne tient pas compte de l'erreur du modèle de terrain.

Dans le premier et le deuxième mode de réalisation, ainsi que dans les première et deuxième variantes, on a estimé la grandeur statistique G et l'erreur de localisation ε relativement aux deux coordonnées géographiques planimétriques X, Y et à la coordonnée géographique altimétrique Z ou relativement à une combinaison des coordonnées planimétriques X et Y.

En variante, on estime la grandeur statistique G et l'erreur de localisation ε relativement à seulement certaines des coordonnées géographiques X, Y, Z, en particulier relativement à une ou à deux de ces coordonnées. En effet, dans certains cas, il n'est pas indispensable de disposer d'une information sur l'erreur de localisation suivant chacune des coordonnées géographiques.

Dans le cas où l'on utilise un système de coordonnées différent pour localiser un point P dans le terrain T, la grandeur statistique G et l'erreur de localisations ε sont calculées relativement à au moins l'une de ces coordonnées, et par exemple relativement à chacune de ces coordonnées ou relativement à des combinaisons de ces coordonnées.

Le dispositif 1 illustré sur la figure 1 est propre à mettre en oeuvre le procédé selon le premier mode de réalisation, le deuxième mode de réalisation ou selon les premières ou deuxième variantes.

A cet effet, il comprend des moyens 60 pour fournir la fonction de prise de vue f, le modèle de terrain M, la loi de probabilité D($\theta_1$, ..., $\theta_n$) des grandeurs ($\theta_1$, ..., $\theta_n$) ainsi que l'éventuelle loi de probabilité D(err) du champ d'erreur err(X,Y) du modèle de terrain M considéré. Ces moyens 60 sont intégrés au calculateur 6, la fonction de prise de vue f, le modèle de terrain M, ainsi que la loi de probabilité D($\theta_1$, ..., $\theta_n$) des grandeurs ($\theta_1$, ..., $\theta_n$), et la loi de probabilité D(err) du champ d'erreur err(X,Y) du modèle de terrain M étant par exemple stockés dans des bases de données dans les moyens de stockage 7.

Le dispositif 1 comprend en outre :

- des moyens 62 pour déduire une relation de localisation h à partir de la fonction de prise de vue f et à l'aide du modèle de terrain M ;
- des moyens 64 pour estimer, à l'aide de l'au moins une fonction de localisation g appliquée pour le point $P_0$ de coordonnées image I,c de l'image brute $A_0$ et de la loi de probabilité D($\theta_1$, ..., $\theta_n$) des grandeurs $\theta_1$, ..., $\theta_n$, la valeur de la grandeur statistique G caractéristique de la loi de probabilité D(X, Y, Z) d'au moins l'une des coordonnées géographiques X,Y, Z associées au point $P_0$ de l'image brute $A_0$ ; et
- des moyens 66 pour déduire de la valeur de la grandeur statistique G l'erreur de localisation géographique ε du point $P_0$ de l'image brute $A_0$.

Les moyens 62, 64 et 66 sont intégrés au calculateur 6 de l'unité de traitement et de stockage 2.

Les moyens de stockage 7 comprennent notamment les coordonnées image I, c définissant la position de chaque point $P_0$ dans l'image brute $A_0$, les valeurs annoncées $x_T$, $y_T$, $z_T$ des coordonnées géographiques correspondant à chaque point $P_0$ dans l'image brute $A_0$, ainsi que l'une ou plusieurs des données suivantes : la fonction de prise de vue f et/ou le modèle de terrain M accompagné de son champ d'erreur err(X,Y).

Le procédé de détermination décrit en référence au premier mode de réalisation, au deuxième mode de réalisation, ainsi qu'à ses première et deuxième variantes, ainsi que le dispositif associé présentent l'avantage de permettre l'évaluation de l'erreur de localisation en chaque point de l'image brute géoréférencée. L'erreur de localisation estimée tient ainsi compte de la variabilité spatiale de l'erreur de localisation. En outre, l'utilisation des méthodes statistiques d'estimation décrites ci-dessus permet d'obtenir une estimation précise de l'erreur, malgré la non linéarité de la ou chaque fonction de .localisation. Dans le cas où l'on tient compte du champ d'erreur du modèle de terrain, la précision de l'estimation statistique de l'erreur de localisation est améliorée, puisqu'elle tient compte également des incertitudes provenant de ce modèle. Enfin, l'erreur de localisation est estimée pour chaque point sans faire appel à des points d'appui dont les coordonnées géographiques sont connues avec certitude. Ainsi, elle peut également être calculée pour des points d'images brutes acquises dans des zones dans lesquelles on ne dispose pas de points d'appui de coordonnées géographiques connues.

Dans un troisième mode de réalisation de l'invention, l'image géoréférencée est une image géoréférencée $A_2$ construite à partir d'une ou plusieurs images brutes $A_0$.

Dans ce qui suit, l'image géoréférencée est une image orthorectifiée $A_2$, encore appelée orthoimage, construite à partir de l'image brute $A_0$ ou d'une pluralité d'images brutes $A_0$.

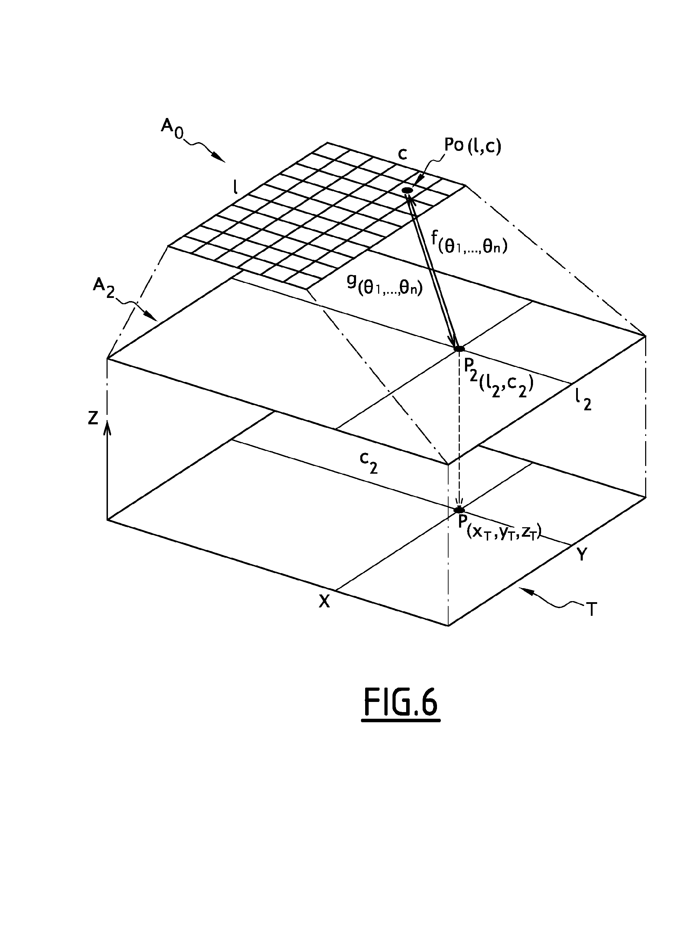

La figure 6 illustre les relations entre l'image orthorectifiée $A_2$, le terrain T et une image brute $A_0$ à partir de laquelle l'image orthorectifiée $A_2$ a été construite.

De manière classique, une image orthorectifiée est une image qui a été filtrée de l'influence du relief visualisé. Sa géométrie a été redressée de sorte que chaque point soit superposable à une carte plane qui lui correspond. En d'autres termes, elle semble être prise à la verticale de tous les points P du terrain T qu'elle représente, ces points P étant situés sur un terrain parfaitement plat ; en particulier l'échelle d'une image orthorectifiée est uniforme sur toute l'image.

L'image orthorectifiée $A_2$ est construite, de manière connue, à partir d'une ou plusieurs images brutes $A_0$. Elle comprend des points $P_2$, chaque point $P_2$ étant identifié au sein de l'image orthorectifiée $A_2$ par des coordonnées $I_2$, $C_2$ définissant sa position dans l'image orthorectifiée $A_2$. Par construction, les valeurs $I_2$, $C_2$ des coordonnées de chaque point $P_2$ de l'image orthorectifiée $A_2$ correspondent aux valeurs annoncées $x_T$, $y_T$ des coordonnées planimétriques définissant la localisation géographique de l'objet représenté par le point $P_2$ dans le terrain T à l'aide d'une correspondance bilinéaire. La valeur annoncée $z_T$ de la coordonnée altimétrique correspondant au point $P_2$ de l'image orthorectifiée $A_2$ est obtenue à l'aide du modèle de terrain M. Ainsi, l'image orthorectifiée $A_2$ est par nature une image géoréférencée dont la fonction de prise de vue f est une simple fonction linéaire.

Le procédé selon le troisième mode de réalisation est un procédé de détermination de l'erreur de localisation $\varepsilon_2$ d'un point $P_2$ de l'image orthorectifiée $A_2$.

Dans le cadre de ce procédé, le producteur de l'image géoréférencée $A_2$ fournit :

- la fonction de prise de vue f associée à la ou chaque image brute $A_0$;
- la loi de probabilité $D(\theta_1, ..., \theta_n)$ des grandeurs $\theta_1, ..., \theta_n$ dépendant des conditions de prise de la ou chaque image brute $A_0$ ;
- le modèle de terrain M, ainsi que la loi de probabilité $D(err)$ de son champ d'erreur $err(X,Y)$ éventuel.

Le calculateur 6 déduit ensuite la relation de localisation h à partir de la fonction de prise de vue f et à l'aide du modèle de terrain M.

Dans une étape 40 du procédé selon le troisième mode de réalisation, on détermine le point $P_0$ de l'image brute $A_0$ à partir duquel le point $P_2$ de l'image orthorectifiée $A_2$ a été construit.

A cet effet, dans une sous-étape 400, on détermine, à l'aide du modèle de terrain M, dans lequel l'erreur de terrain $err(X, Y)$ a été prise égale à zéro et des valeurs annoncées $x_T$, $y_T$ des coordonnées planimétriques identiques par construction aux coordonnées $I_2$, $C_2$ du point $P_2$, la valeur annoncée $z_T$ de la coordonnée altimétrique correspondant au point $P_2$ de l'image orthorectifiée $A_2$. On obtient ainsi les valeurs annoncées $x_T$, $y_T$, $z_T$ des coordonnées géographiques définissant la localisation géographique du point $P_2$.

Dans une sous-étape 410, on applique la fonction de prise de vue f à chaque point $P_2$ de l'image orthorectifiée $A_2$, c'est-à-dire aux valeurs annoncées $x_T$, $y_T$, $z_T$ des coordonnées géographiques de manière à obtenir les valeurs des coordonnées I, c du point $P_0$ de l'image brute $A_0$ correspondant. Lors de l'application de la fonction de prise de vue f, on identifie les grandeurs $\theta_1, ..., \theta_n$ à leurs espérances indiquées par le producteur de l'image brute $A_0$.

Ainsi, à l'issue de l'étape 40, on a déterminé le point $P_0$ de l'image brute $A_0$ à partir duquel a été construit le point $P_2$ de l'image orthorectifiée $A_2$, c'est-à-dire le point $P_0$ de l'image brute $A_0$ correspondant au point $P_2$ de l'image orthorectifiée $A_2$ considéré. Dans ce contexte, les valeurs I, c des coordonnées du point $P_0$ sont des nombres réels non nécessairement entiers.

A l'issue de l'étape 40, on applique les étapes 10, 11, 20 et 30 du procédé selon le premier mode de réalisation, le deuxième mode de réalisation et ses première ou deuxième variantes au point $P_0$ de l'image brute $A_0$ correspondant au point $P_2$ de l'image orthorectifiée $A_2$ déterminé à l'étape 40.

A l'issue de l'étape 30, on a obtenu une estimation de l'erreur de localisation $\varepsilon$ du point $P_0$ de l'image brute $A_0$ à partir duquel a été construit le point $P_2$ de l'image orthorectifiée $A_2$.

Dans une étape 50 du procédé, on identifie l'erreur de localisation $\varepsilon$ du point $P_0$ de l'image brute $A_0$ à l'erreur de localisation $\varepsilon_2$ du point $P_2$ de l'image orthorectifiée $A_2$.

En option, on reproduit les étapes 10 à 50 pour chaque point $P_2$ de l'image orthorectifiée $A_2$. On obtient ainsi l'erreur de localisation $\varepsilon_2$ de chaque point $P_2$ de l'image orthorectifiée $A_2$.

Le procédé selon le troisième mode de réalisation a été expliqué pour une image orthorectifiée $A_2$. Le procédé s'applique de la même manière pour tout type d'image géoréférencée, construite à partir d'une ou plusieurs images brutes, sous réserve que l'on soit capable de faire correspondre à chaque point de l'image géoréférencée un point d'une image brute à partir duquel il a été construit.

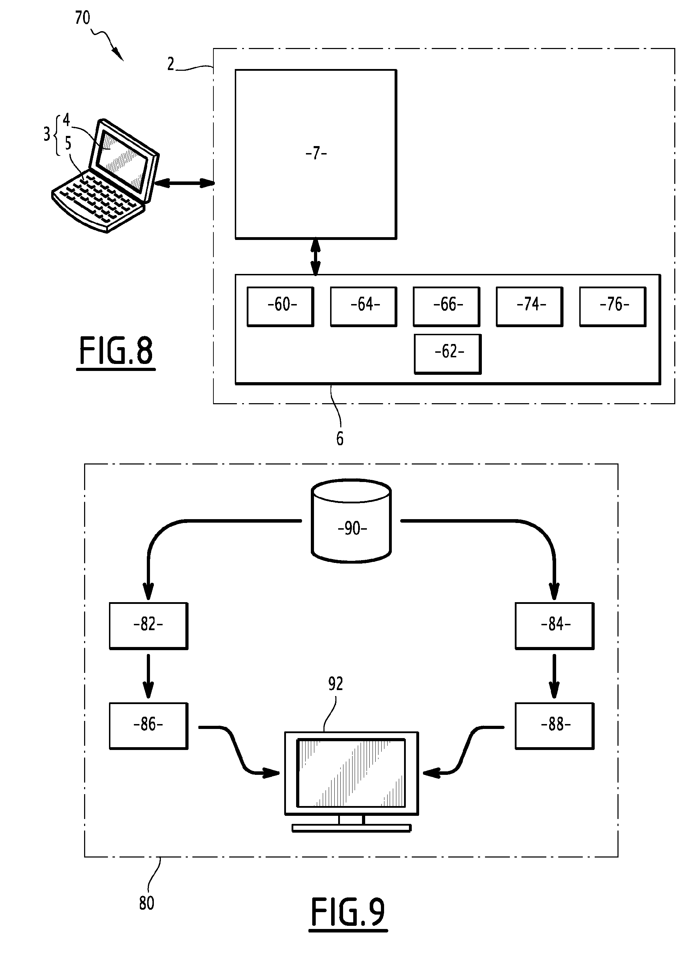

La figure 8 illustre un dispositif 70 pour la détermination de l'erreur de localisation d'un point $P_2$ de

l'image géoréférencée $A_2$. Ce dispositif 70 ne diffère du dispositif 1 illustré sur la figure 1 qu'en ce qu'il comprend en outre :

- des moyens 74 pour déterminer un point $P_0$ de coordonnées I, c de l'une des images brutes $A_0$ à partir duquel le point $P_2$ de l'image géoréférencée $A_2$ a été construit ;
- des moyens 76 pour déduire l'erreur de localisation $\varepsilon_2$ du point $P_2$ de l'image géoréférencée $A_2$ de l'erreur de localisation géographique $\varepsilon$ du point $P_0$ de l'image brute $A_0$.

Les moyens 74 et 76 sont intégrés au calculateur 6 de l'unité de traitement et de stockage 2. Dans ce cas, les moyens de stockage 7 comprennent en outre les coordonnées $I_2$, $c_2$ définissant la position de chaque point $P_2$ dans l'image géoréférencée $A_2$, qui est en particulier une image orthorectifiée.

Le dispositif 70 est ainsi propre à mettre en oeuvre en outre les étapes 40 et 50 du procédé selon le troisième mode de réalisation sous la commande d'un programme d'ordinateur adapté.

Le procédé de détermination décrit en référence au troisième mode de réalisation, ainsi que le dispositif associé présentent l'avantage de permettre l'évaluation de l'erreur de localisation en chaque point d'une image géoréférencée construite à partir d'une image brute, et en particulier d'une image orthorectifiée. L'erreur de localisation estimée tient ainsi compte de la variabilité spatiale de l'erreur de localisation. En outre, l'utilisation des méthodes statistiques d'estimation décrites ci-dessus permet d'obtenir une estimation précise de l'erreur, malgré la non linéarité de la fonction de localisation. Enfin, dans le cas où l'on tient compte du modèle statistique de l'erreur de terrain, l'erreur de localisation estimée tient compte également des incertitudes provenant du modèle de terrain.

L'invention a également pour objet un dispositif 80 de représentation de l'erreur de localisation $\varepsilon_3$ d'une pluralité de points $P_3$ d'une image géoréférencée $A_3$. Ce dispositif 80 est représenté de manière schématique sur la figure 9. Il comprend:

- des moyens 82 pour fournir l'image géoréférencée $A_3$ à représenter ;
- des moyens 84 pour fournir, pour chaque point d'une pluralité de points $P_3$ de l'image géoréférencée $A_3$, une valeur estimée de l'erreur de localisation $\varepsilon_3$ propre à ce point $P_3$, cette erreur étant non uniforme sur l'image $A_3$ ;
- des moyens 86 pour représenter l'image géoréférencée $A_3$ ; et
- des moyens 88 pour représenter l'erreur de localisation $\varepsilon_3$ pour au moins un point parmi une pluralité de points $P_3$ de l'image géoréférencée $A_3$, avantageusement pour chaque point de la pluralité de points $P_3$, de manière à permettre la visualisation de l'erreur de localisation par un utilisateur.

L'image géoréférencée $A_3$ à représenter est enregistrée dans une base de données 90. La base de données 90 est par exemple stockée dans un moyen de stockage, tel qu'une mémoire d'un ordinateur. Elle associe à chaque point $P_3$ de l'image géoréférencée $A_3$ de coordonnées $I_3$, $c_3$ dans l'image géoréférencée $A_3$ :

- les valeurs annoncées $x_T$, $y_T$, $z_T$ des coordonnées géographiques correspondantes, définissant la localisation dans le terrain T de l'objet représenté par le point $P_3$ ;
- une valeur V attribuée à ce point $P_3$, par exemple une valeur d'intensité ou de radiométrie, cette valeur V étant représentative de l'objet représenté par le point $P_3$ ; et
- l'erreur de localisation $\varepsilon_3$ propre à ce point $P_3$.

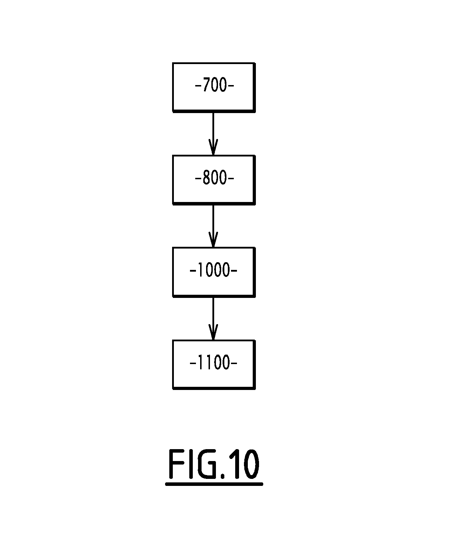

La figure 10 représente de manière schématique le procédé de représentation de l'erreur de localisation $\varepsilon_3$ en au moins une pluralité de points $P_3$ de l'image géoréférencée $A_3$.

Dans une étape 700 de ce procédé, les moyens 82 pour fournir l'image géoréférencée $A_3$ fournissent l'image géoréférencée $A_3$, par exemple à la requête d'un utilisateur. A cet effet, ils se connectent à la base de données 90 et en extraient des données relatives à l'image géoréférencée $A_3$, en particulier, ils extraient, pour chaque point $P_3$ de l'image géoréférencée $A_3$, les valeurs annoncées $x_T$, $y_T$, $z_T$ des coordonnées géographiques correspondantes, ainsi que la valeur V attribuée à ce point $P_3$.

Dans une étape 800, ils fournissent les données extraites de la base de données 90 aux moyens 86 pour représenter l'image géoréférencée $A_3$. Ces moyens 86 représentent alors l'image géoréférencée $A_3$ de manière à permettre sa visualisation par l'utilisateur. A cet effet, les moyens 86 affichent par exemple l'image géoréférencée $A_3$ sur un écran d'affichage 92 ou impriment l'image géoréférencée $A_3$.

Dans une étape 1000, les moyens 84 de fourniture de la valeur estimée de l'erreur de localisation $\varepsilon_3$ se connectent à la base de données 90 et en extraient, pour au moins une pluralité de points $P_3$ de l'image géoréférencée $A_3$, et avantageusement pour chaque point $P_3$ de l'image géoréférencée $A_3$ la valeur estimée de l'erreur de localisation $\varepsilon_3$ correspondant à chacun desdits points $P_3$.

Dans une étape 1100, les moyens 88 de représentation de l'erreur de localisation représentent l'erreur de localisation $\varepsilon_3$ correspondant à chaque point $P_3$ et fournie par les moyens 84 à l'étape 1000. A cet effet, ils produisent par exemple une carte d'erreur C représentant, pour chaque point $P_3$ de l'image géoréférencée $A_3$ la valeur estimée de l'erreur de localisation $\varepsilon_3$. Dans la carte d'erreur C, l'erreur de localisation $\varepsilon_3$ est par exemple codée par la couleur attribuée au point $P_3$ correspon-

dant. Ainsi, on fait correspondre un niveau de couleur à chaque valeur ou plage de valeurs possibles de l'erreur de localisation $\varepsilon_3$. Le codage des couleurs est par exemple réalisé par une fonction informatique de type « colormap », cette fonction faisant correspondre une nuance de couleur à chaque valeur possible de l'erreur de localisation $\varepsilon_3$. L'échelle des couleurs peut par exemple s'étendre du vert au rouge, le vert représentant des zones de l'image $A_3$ dans lesquelles l'erreur de localisation $\varepsilon_3$ est inférieure à un premier seuil, par exemple inférieure à la distance typique dans le terrain T entre deux pixels consécutifs de l'image $A_3$, le rouge représentant des zones de l'image $A_3$ dans lesquelles l'erreur de localisation $\varepsilon_3$ est supérieure à un deuxième seuil, par exemple supérieure à 10 fois le premier seuil, et le jaune représentant des zones intermédiaires, dans lesquelles l'erreur de localisation $\varepsilon_3$ est comprise entre le premier seuil et le deuxième seuil. Ces valeurs de seuil sont à définir en fonction des besoins liés à l'application considérée. Il est également possible de traduire l'histogramme des erreurs de localisation $\varepsilon_3$ avec des quantiles statistiques.

En variante, l'erreur de localisation $\varepsilon_3$ est codée en niveaux de gris, l'intensité d'un point étant par exemple d'autant plus faible que l'erreur de localisation $\varepsilon_3$ est élevée.

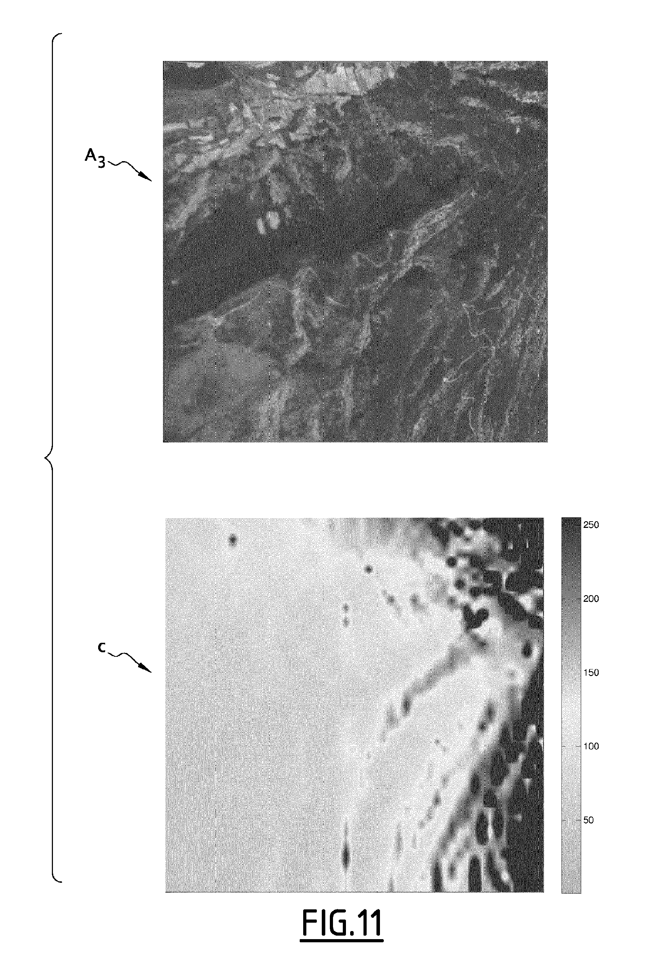

Les moyens 88 de représentation de l'erreur de localisation représentent la carte d'erreur C, par exemple en l'affichant sur l'écran d'affichage 92, avantageusement à proximité de l'image géoréférencée $A_3$, en particulier sous l'image géoréférencée $A_3$, comme cela est représenté sur la figure 11, de manière à permettre à l'utilisateur de visualiser simultanément l'image géoréférencée $A_3$ et la carte d'erreur C correspondante. Selon une variante, les moyens de représentation 88 impriment la carte d'erreur C.

Le code couleurs ou niveaux de gris utilisé pour coder le niveau de l'erreur de localisation $\varepsilon_3$ en chaque point de l'image géoréférencée $A_3$ présente l'avantage de permettre à un utilisateur d'avoir une vision synthétique de la variabilité de l'erreur de localisation $\varepsilon_3$ sur l'image géoréférencée $A_3$.

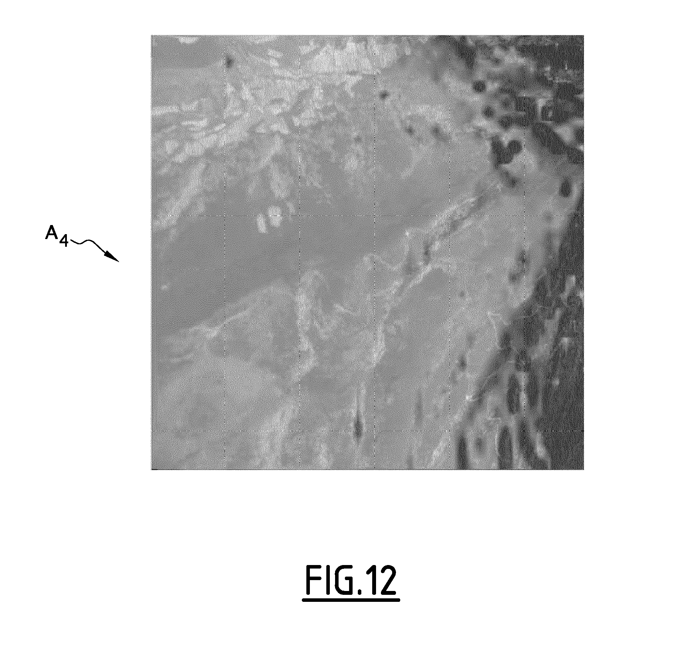

Selon la deuxième variante représentée sur la figure 12, les moyens 88 de représentation de l'erreur de localisation $\varepsilon_3$ représentent la carte d'erreur C en la superposant à l'image géoréférencée $A_3$ de manière à former une image combinée $A_4$. Dans ce cas, dans l'image combinée $A_4$, l'erreur de localisation est représentée par un premier paramètre, par exemple la nuance de couleur, tandis que la valeur V (valeur radiométrique ou intensité) du point correspondant de l'image géoréférencée $A_3$ est représentée par un deuxième paramètre, par exemple le niveau de gris. En outre, le dispositif 80 comprend des moyens d'ajustement de la transparence de la carte d'erreur C superposée à l'image géoréférencée $A_3$. Selon cette variante, la carte d'erreur C est représentée superposée à l'image géoréférencée $A_3$ de manière permanente. Alternativement, elle est représentée de manière intermittente sur l'image géoréférencée $A_3$. A cette effet, elle est par exemple affichée sur l'image géoréférencée $A_3$ de manière clignotante, avec une fréquence de clignotement supérieure à 0,5 Hertz et inférieure à 20 Hz de manière à induire une rémanence de la carte d'erreur C sur la rétine d'un utilisateur dans l'intervalle de clignotement.

Les étapes 1000 et 1100 sont par exemple mises en oeuvre simultanément aux étapes 700 et 800.

Le procédé selon le deuxième mode de réalisation ne diffère du procédé selon le premier mode de réalisation que par les étapes décrites ci-dessous.

Dans une étape 1200, mise en oeuvre après l'étape 800 de représentation de l'image géoréférencée $A_3$, et avant l'étape 1000, l'utilisateur sélectionne un point $P_3$ de l'image géoréférencée $A_3$, par exemple à l'aide d'un pointeur d'une souris ou par une saisie par l'intermédiaire d'un clavier d'ordinateur.

Lors de l'étape 1000, les moyens 84 de fourniture de la valeur estimée de l'erreur de localisation $\varepsilon_3$ extraient de la base de données 90 uniquement la valeur estimée de l'erreur de localisation $\varepsilon_3$ correspondant audit point $P_3$, et non la valeur estimée de l'erreur de localisation $\varepsilon_3$ de chaque point $P_3$ ou d'une pluralité de points $P_3$ de l'image géoréférencée $A_3$.

Lors de l'étape 1100, les moyens 88 de représentation de l'erreur de localisation représentent l'erreur de localisation $\varepsilon_3$ correspondant au point $P_3$ et fournie par les moyens 84 à l'étape 1000. A cet effet, ils affichent par exemple au voisinage du point $P_3$ ou de manière superposée au point $P_3$ une étiquette sur laquelle est indiquée une information relative à l'erreur de localisation $\varepsilon_3$, accompagnée optionnellement des coordonnées annoncées $x_T$, $y_T$, $z_T$ de localisation géographique $P_3$.

Optionnellement, l'étiquette comprend également une indication de l'espérance E(X), E(Y), E(Z) de chacune des coordonnées géographiques X, Y, Z.

L'information relative à l'erreur de localisation $\varepsilon_3$ est par exemple un histogramme de la loi de probabilité D(X, Y, Z) des coordonnées géographiques X, Y, Z.

Optionnellement ou en variante, il s'agit de l'écart type de chacune des coordonnées géographiques X, Y, Z autour de sa valeur annoncée respective $x_T$, $y_T$, $z_T$.

En variante, il s'agit de l'écart type planimétrique, représentatif de l'erreur planimétrique, c'est-à-dire de l'erreur de localisation relativement aux coordonnées planimétriques X et Y et/ou de l'écart type altimétrique, correspondant à l'écart type de la coordonnée altimétrique Z autour de sa valeur annoncée $z_T$.

Le procédé de représentation selon ce deuxième mode de réalisation présente l'avantage de permettre à l'utilisateur de visualiser l'erreur de localisation $\varepsilon_3$ associée à un point $P_3$ de son choix de l'image géoréférencée $A_3$.

L'erreur de localisation $\varepsilon_3$ représentée par le dispositif 80 mettant en oeuvre le procédé de représentation tel que décrit ci-dessus est par exemple une erreur

de localisation $\varepsilon_3$ calculée par le procédé de détermination de l'erreur de localisation décrit ci-dessus, et enregistrée dans la base de données 90.

L'image géoréférencée $A_3$ est par exemple une image brute géoréférencée, telle que l'image brute $A_0$ géoréférencée ou une image orthorectifiée telle que l'image orthorectifiée $A_2$.

**Revendications**

1. Procédé de représentation de l'erreur de localisation d'une pluralité de points ($P_0$ ; $P_2$ ; $P_3$) d'une image géoréférencée ($A_0$ ; $A_2$; $A_3$), comprenant les étapes de :

   - fournir une image géoréférencée ($A_0$ ; $A_2$; $A_3$), dans laquelle chaque point ($P_0$ ; $P_2$ ; $P_3$) de coordonnées image ($l$, $c$ ; $l_2$, $c_2$; $l_3$, $c_3$) est associé à des valeurs annoncées ($x_T$, $y_T$, $z_T$) des coordonnées géographiques définissant la localisation géographique de l'objet correspondant à ce point ($P_0$ ; $P_2$; $P_3$) de l'image géoréférencée ($A_0$ ; $A_2$; $A_3$) ;
   - représenter l'image géoréférencée ($A_0$ ; $A_2$; $A_3$) ;
   le procédé étant **caractérisé en ce qu'**il comprend en outre les étapes de :
   - fournir, pour chaque point parmi la pluralité de points ($P_0$ ; $P_2$; $P_3$) de l'image géoréférencée ($A_0$ ; $A_2$; $A_3$), une valeur estimée de l'erreur de localisation ($\varepsilon$ ; $\varepsilon_2$ ; $\varepsilon_3$) propre à ce point ($P_0$; $P_2$; $P_3$), cette erreur ($\varepsilon$ ; $\varepsilon_2$ ; $\varepsilon3$) étant non uniforme sur l'image ($A_0$ ; $A_2$ ; $A_3$) ; et
   - représenter l'erreur de localisation ($\varepsilon$ ; $\varepsilon_2$ ; $\varepsilon_3$) pour au moins un point parmi la pluralité de points ($P_0$ ; $P_2$ ; $P_3$) de l'image géoréférencée ($A_0$ ; $A_2$ ; $A_3$) de manière à permettre la visualisation de l'erreur de localisation ($\varepsilon$ ; $\varepsilon_2$ ; $\varepsilon_3$) par un utilisateur.

2. Procédé selon la revendication 1, dans lequel on représente l'erreur de localisation ($\varepsilon$ ; $\varepsilon_2$ ; $\varepsilon_3$) pour chaque point de la pluralité de points ($P_0$ ; $P_2$ ; $P_3$) de l'image géoréférencée ($A_0$ ; $A_2$ ; $A_3$).

3. Procédé selon l'une des revendications 1 et 2, dans lequel l'erreur de localisation ($\varepsilon$ ; $\varepsilon_2$ ; $\varepsilon_3$) est représentée sur l'image géoréférencée ($A_0$ ; $A_2$; $A_3$) elle-même.

4. Procédé selon la revendication 3, dans lequel l'image géoréférencée ($A_0$ ; $A_2$; $A_3$) et l'erreur de localisation ($\varepsilon$ ; $\varepsilon_2$ ; $\varepsilon_3$) sont affichées par l'intermédiaire de moyens d'affichage (92), l'erreur de localisation ($\varepsilon$ ; $\varepsilon_2$ ; $\varepsilon_3$) étant affichée sur l'image géoréférencée ($A_0$ ; $A_2$; $A_3$) de manière intermittente.

5. Procédé selon la revendication 4, dans lequel l'erreur de localisation ($\varepsilon$ ; $\varepsilon_2$ ; $\varepsilon_3$) d'un point ($P_0$ ; $P_2$; $P_3$) d'une image géoréférencée ($A_0$ ; $A_2$; $A_3$) s'affiche lorsque l'utilisateur sélectionne ledit point ($P_0$ ; $P_2$; $P_3$).

6. Procédé selon l'une des revendications 1 et 2, dans lequel on produit une carte d'erreur (C), ladite carte d'erreur (C) représentant l'erreur de localisation ($\varepsilon$ ; $\varepsilon_2$ ; $\varepsilon_3$) pour la pluralité de points ($P_0$ ; $P_2$; $P_3$) de l'image géoréférencée ($A_0$ ; $A_2$; $A_3$), et dans lequel la représentation de l'erreur de localisation ($\varepsilon$ ; $\varepsilon_2$ ; $\varepsilon_3$) consiste à représenter ladite carte d'erreur (C).

7. Procédé selon la revendication 6, prise en combinaison avec la revendication 3, dans lequel la carte d'erreur (C) est représentée superposée sur l'image géoréférencée ($A_0$ ; $A_2$; $A_3$) de manière à former une image combinée ($A_4$), dans laquelle l'erreur de localisation ($\varepsilon$ ; $\varepsilon_2$ ; $\varepsilon_3$) associée à chacun de la pluralité de points ($P_0$ ; $P_2$; $P_3$) est représentée par un premier paramètre et l'objet représenté par ce point ($P_0$ ; $P_2$; $P_3$) est représenté par un deuxième paramètre.

8. Procédé selon la revendication 7, dans lequel, la carte d'erreur (C) et l'image géoréférencée ($A_0$ ; $A_2$; $A_3$) sont affichées par l'intermédiaire de moyens d'affichage, et dans lequel l'affichage de la carte d'erreur (C) sur l'image géoréférencée ($A_0$ ; $A_2$; $A_3$) est intermittent, la carte d'erreur (C) étant affichée de manière clignotante avec une fréquence de clignotement inférieure à la fréquence de rémanence rétinienne, c'est-à-dire comprise entre 0,5 et 20 Hz.

9. Dispositif de représentation de l'erreur de localisation ($\varepsilon$ ; $\varepsilon_2$ ; $\varepsilon_3$) d'une pluralité de points ($P_0$ ; $P_2$; $P_3$) d'une image géoréférencée ($A_0$ ; $A_2$; $A_3$), lequel comprend :

   - des moyens pour fournir une image géoréférencée ($A_0$ ; $A_2$ ; $A_3$), dans laquelle chaque point ($P_0$ ; $P_2$ ; $P_3$) de coordonnées image ($l$, $c$ ; $l_2$, $c_2$ ; $l_3$, $c_3$) est associé à des valeurs annoncées ($x_T$, $y_T$, $z_T$) des coordonnées géographiques définissant la localisation géographique de l'objet correspondant au point ($P_0$ ; $P_2$ ; $P_3$) de l'image géoréférencée ($A_0$ ; $A_2$ ; $A_3$) ;
   - des moyens pour représenter l'image géoréférencée ($A_0$ ; $A_2$ ; $A_3$) ;
   le dispositif étant **caractérisé en ce qu'**il comprend en outre :
   - des moyens pour fournir, pour chaque point parmi la pluralité de points ($P_0$ ; $P_2$ ; $P_3$) de l'image géoréférencée ($A_0$ ; $A_2$ ; $A_3$), une valeur estimée de l'erreur de localisation ($\varepsilon$ ; $\varepsilon_2$ ; $\varepsilon_3$) propre à ce point ($P_0$ ; $P_2$; $P_3$), cette erreur ($\varepsilon$ ; $\varepsilon_2$ ; $\varepsilon_3$) étant non uniforme sur l'image ($A_0$ ; $A_2$ ; $A_3$) ; et

- des moyens pour représenter l'erreur de localisation ($\varepsilon$ ; $\varepsilon_2$ ; $\varepsilon_3$) pour au moins un point parmi la pluralité de points ($P_0$ ; $P_2$ ; $P_3$) de l'image géoréférencée ($A_0$ ; $A_2$ ; $A_3$) de manière à permettre la visualisation de l'erreur de localisation ($\varepsilon$ ; $\varepsilon_2$ ; $\varepsilon_3$) par un utilisateur.

FIG.1

**FIG.2**

10

f
M
$D(\theta_1,...,\theta_n)$
D(err)

11

h

20

-210-

$S_1,...,S_N$

-212-

$(xi,yi,zi)_{i=1,...,N}$

-214-

D(X,Y,Z)

-216-

$G(P_0)\begin{vmatrix} G_X \\ G_Y \\ G_Z \end{vmatrix}$

30

$\mathcal{E}(P_0)\begin{vmatrix} \mathcal{E}_X \\ \mathcal{E}_Y \\ \mathcal{E}_Z \end{vmatrix}$

<u>FIG.3</u>

10

$f$
$M$
$D(\theta_1,...,\theta_n)$
$D(err)$

11

$g$

20

-220-

$(Si)_{i=0,...,2N}$

-222-

$(xi,yi,zi)_{i=0,...,2N}$

-224-

$P_V$
$E(V)$

-226-

$G(P_0) \begin{vmatrix} G_X \\ G_Y \\ G_Z \end{vmatrix}$

30

$\mathcal{E}(P_0) \begin{vmatrix} \mathcal{E}_X \\ \mathcal{E}_Y \\ \mathcal{E}_Z \end{vmatrix}$

<u>FIG.4</u>

FIG.5

$$\underline{\text{FIG.6}}$$

$$M(x_T, y_T)$$ — 400

$$z_T$$

410 — $$f_{(\theta_1, \cdots \theta_n)}(x_T, y_T, z_T)$$

40

$$P_0(l, c)$$

10

$$\begin{array}{l} f \\ M \\ D(\theta_1, \ldots, \theta_n) \\ D(err) \end{array}$$

$$h$$

11

-210-

$$S_1, \ldots, S_N$$

-212-

$$(xi, yi, zi)_{i=1,\ldots,N}$$

-214-

$$D(X, Y, Z)$$

-216-

20

$$G(P_0) \left| \begin{array}{l} G_X \\ G_Y \\ G_Z \end{array} \right.$$

30

$$\mathcal{E}(P_0) \left| \begin{array}{l} \mathcal{E}_X \\ \mathcal{E}_Y \\ \mathcal{E}_Z \end{array} \right.$$

50

$$\mathcal{E}(P_0) = \mathcal{E}_2(P_2)$$

$$\mathcal{E}_2(P_2) \left| \begin{array}{l} \mathcal{E}_{2X} \\ \mathcal{E}_{2Y} \\ \mathcal{E}_{2Z} \end{array} \right.$$

## FIG.7

70

2

3 { 4
     5

-7-

-60-   -64-   -66-   -74-   -76-

-62-

## FIG.8

6

-90-

-82-                    -84-

92

-86-                    -88-

80

## FIG.9

```
        ┌─────────┐
        │  -700-  │
        └─────────┘
             │
             ▼
        ┌─────────┐
        │  -800-  │
        └─────────┘
             │
             ▼
        ┌─────────┐
        │ -1000-  │
        └─────────┘
             │
             ▼
        ┌─────────┐
        │ -1100-  │
        └─────────┘
```

# FIG.10

$A_3$

C

FIG.11

A$_4$

FIG.12

Europäisches
Patentamt

European
Patent Office

Office européen
des brevets

**RAPPORT DE RECHERCHE EUROPEENNE**

Numéro de la demande

EP 11 30 6759

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| L | La description et des dessins ayant été dûment considérés, l'objet revendiqué concerne des processus compris dans la liste des objets et activités exclus de la brevetabilité en vertu des dispositions de l'article 52(2) et (3) CBE ainsi que leur automatisation. Il est indiqué à la demanderesse que, selon la pratique établie de l'OEB, aucune recherche n'est à effectuer pour ces aspects de l'invention telle que revendiquée. Les seuls aspects techniques identifiables de l'invention telle que revendiquée concernent l'utilisation de techniques informatiques conventionnelles afin de traiter des données et la représentation de ces données.<br>Les techniques informatiques employées sont considérées être universellement connues car largement répandues et accessibles à tous à la date de dépôt de la demande ci-présente, ne comprenant pour l'essentiel que des moyens définis de manière fonctionnelle mais semblant impliquer un écran pouvant afficher une image et des moyens de stockage d'information et des moyens de calculs. La notoriété d'un tel art antérieur ne peut être raisonnablement contestée.<br>----- | 1-9 | INV.<br>G09B29/10<br><br>DOMAINES TECHNIQUES RECHERCHES (IPC)<br><br>G09B |

Le présent rapport a été établi pour toutes les revendications

| Lieu de la recherche | Date d'achèvement de la recherche | Examinateur |
|---|---|---|
| Munich | 14 mai 2012 | Hanon, David |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
...............................................................................
& : membre de la même famille, document correspondant

EPO FORM 1503 03.82 (P04C02)

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **RUDOLPH VAN DER MERWE.** Sigma-Point Kalman Filters for Probabilistic Inference in Dynamic State-Space Models. *PhD Thesis,* Avril 2004